Europäisches Patentamt

European Patent Office

Office européen des brevets

(19)

(11) Publication number: **0 235 885 B1**

# EUROPEAN PATENT SPECIFICATION

(12)

(45) Date of publication of patent specification: **12.08.92**   (51) Int. Cl.5: **C08L 81/06**, C08J 5/04

(21) Application number: **87300339.6**

(22) Date of filing: **15.01.87**

The file contains technical information submitted after the application was filed and not included in this specification

(54) **Polymer composition.**

(30) Priority: **30.01.86 GB 8602332**
**05.02.86 GB 8602828**

(43) Date of publication of application:
**09.09.87 Bulletin 87/37**

(45) Publication of the grant of the patent:
**12.08.92 Bulletin 92/33**

(84) Designated Contracting States:
**AT BE CH DE FR GB IT LI LU NL SE**

(56) References cited:
**EP-A- 102 159**
**EP-A- 0 056 703**
**GB-A- 1 337 434**
**US-A- 3 941 748**

(73) Proprietor: **IMPERIAL CHEMICAL INDUSTRIES PLC**
**Imperial Chemical House, Millbank**
**London SW1P 3JF(GB)**

(72) Inventor: **Cogswell, Fredric Neil**
**10 Latimer Lane**
**Guisborough Cleveland(GB)**
Inventor: **Cox, Michael Kenneth**
**3 Rivermead Avenue Riversgarth Est**
**Darlington Co Durham(GB)**
Inventor: **Leach, David Colin**
**10 Scugdale Close**
**Yarm Cleveland(GB)**

(74) Representative: **Graham, John George et al**
**ICI Group Patents Services Dept. PO Box 6**
**Shire Park Bessemer Road**
**Welwyn Garden City Herts, AL7 1HD(GB)**

## Description

The present invention relates to a polymer composition, in particular to a composition containing a polyarylether derivative and a fibrous reinforcing agent.

Among polyarylether derivatives having good high temperature properties, polyarylethersulphones are generally amorphous but have glass transition temperatures which may be over 200°C and polyaryletherketones are generally crystalline but typically have glass transition temperatures below 200°C, for example between 140°C and 165°C. Some polyaryletherketones have glass transition temperatures of about 200°C, but typically these have melting points close to or even above 400°C and thus have to be processed at a temperature close to that at which rapid degradation occurs.

Polyarylether derivative compositions containing fibrous reinforcing agents, as described for example in EPA 31198, have a high flexural modulus and high heat deflection temperature but show a marked deterioration at above the glass transition temperature; and many such compositions based on polyaryletherketones show the deterioration at considerably below 200°C, typically at between 140°C and 165°C.

A process of producing a fibre-reinforced composition by drawing continuous fibres through a melt comprising a thermoplastic polymer is described in EP-A-0102159. Among the polymers disclosed are polysulphones of general formula -E-O-E'-.

We have now found that a polymer composition based on a particular range of copolymers has improved retention of mechanical properties at temperatures above 200°C.

According to the invention, a polymer composition comprises:

a) at least one aromatic polysulphone consisting of the repeating units

$$-Ph-SO_2-Ph-Ph-SO_2-Ph- \qquad I$$

and

$$-Ph-SO_2-Ph- \qquad II$$

where Ph is paraphenylene, said units being linked together through ether linkages and being present in a relative molar proportion I:II in the range 25:75 to 60:40; and

b) a fibrous reinforcing agent in the form of essentially continuous fibres of glass or carbon;

whereby said composition contains at least 20% by volume of component a) and between 5% to 80% by weight calculated on the total weight of components a) and b) of component b).

The ether linkages may link together two units I, or two units II; or a unit I to a unit II.

If component a) of the composition is a mixture of polysulphones, it preferably consists of two of them, one containing only units II, the other consisting of both units; and the mixture should nonetheless contain units I and II in the relative molar proportions 25:75 to 60:40, respectively. Thus, the mixture may for example contain 50% molar each of a polymer containing only units II and of a polymer consisting of units I and II in the relative molar proportions 50:50. If a mixture of polysulphones is used as component a), it is preferably either a polymer containing only units II (preferably under 20% by weight) mixed with one consisting of units I and II in the relative molar proportions I:II in the range 25:75 to 60:40, or else is a mixture of polymers each of which consists of units I and II in the relative molar proportions I:II in the range 25:75 to 60:40. In any such systems the preferred range is 25:75 to 50:50.

We have obtained useful results when component a) is a single polysulphone consisting of units I and II in equimolar proportions.

We prefer that the polysulphone or mixture have a reduced viscosity (RV), measured as a 1% by weight solution in N,N-dimethyl formamide at 25°C, of at least 0.05 and preferably not more than 2.0. Particularly preferred polysulphones have RV in the range 0.2 to 1.0 especially 0.3 to 0.8.

The fibrous reinforcing agent is glass fibre or, preferably, carbon fibre. For structural applications, it is preferred that the continuous fibrous material, for example glass or carbon, is 30 to 70, more especially 50 to 70, % by volume of the composition.

The composition may contain one or more other materials, for example organic and inorganic fillers such as polytetrafluoroethylene, graphite, boron nitride, mica, talc and vermiculite; nucleating agents; and stabilisers such as phosphates. The total of such materials and fibrous reinforcing agent, should be such that the composition contains at least 20% by volume of the polysulphone or mixture.

The composition is made by passing the fibrous reinforcing agent as an essentially continuous fibre of glass or carbon, into contact with a melt formed from the polysulphone or mixture and diphenyl sulphone.

The composition, now in the form of filaments (fibres) of the fibrous reinforcing agent impregnated with the polysulphone or mixture, may be used alone or together with other materials, for example a further quantity of the same or a different polysulphone or mixture, to form a shaped article. This technique is described in more detail in EP-A 56703, 102158 and especially 102159.

Yet a further technique of producing the composition comprises making a solution of the polysulphone or mixture and contacting the fibrous reinforcing agent therewith. Suitable solvents include dichloromethane, N,N-dimethylformamide, dimethylsulphoxide, and N-methyl-2-pyrrolidone. An essentially continuous fibre of glass or carbon may be passed through a vessel containing the solution and then through a heated zone to evaporate off the solvent. The solution typically contains 1 to 20, preferably 2 to 10, g of polysulphone for each 100 $cm^3$ of solution. This is not a particularly preferred technique since it is difficult to totally remove the solvent and the presence of solvent can adversely affect the properties of the composition.

In a yet further procedure the polysulphone or mixture in film form is laminated to the fibrous reinforcing agent in the form of essentially continuous glass or carbon fibre. The film may be formed by casting from solution but more preferably by melt extrusion, for example by extruding through a slot die and drawing off the extruded film over rollers. Such lamination of film to fibre is effected under conditions of temperature and pressure sufficient to cause the polysulphone or mixture to flow and impregnate the fibres, preferably at least 320°C and typically in the range 340°C to 420°C, and at a pressure of at least 0.1, preferably at least 10, $MN/m^2$. Lamination is conveniently effected using at least one pair of heated rollers.

Each polysulphone of component (a) of the composition can be prepared by an electrophilic process but is conveniently prepared by a nucleophilic process.

Nucleophilic processes for preparing such polysulphones are described, inter alia, in GB-A 1078234, 1153035, 1397260, 1558671, 1569602, and 1586972 and Canadian 847963. Polysulphones containing units I and the preparation thereof are described in GB-A 1397260 and in Polymer, 18 (1977) pages 359 to 364 and 369 to 374. Polysulphones containing units I and II are described in US-A-3941748.

The polysulphones are preferably prepared by polycondensation of at least one aryl dihalide with at least one bisphenol, or of at least two different halophenols. The polycondensation can be effected by forming a metal phenate, particularly an alkali metal phenate, for example by reaction with an alkali metal hydroxide, adding dihalide and thereafter heating the reaction mixture to polycondensation temperature, typically at least 150°C. The polycondensation is preferably in the presence of an alkali metal carbonate or bicarbonate or a mixture thereof. It is also preferably in the presence of a solvent, for example diphenyl sulphone or a substituted derivative thereof. The temperature is conveniently between 150°C and 400°C, with a final temperature preferably in the range 280°C to 320°C.

The polysulphones are conveniently prepared by the polycondensation of compounds of the formulae

$$X^1 - Ph - SO_2 - Ph - Ph - SO_2 - Ph - X^2 \qquad III$$

and

$$X^3 - Ph - SO_2 - Ph - X^4 \qquad IV$$

in the molar proportions of III : IV in the range from 25:75 to 60:40.

wherein Ph is hereinbefore defined, and

$X^1$, $X^2$, $X^3$, and $X^4$ are each a halogen or - OH

where the proportions of III and IV and the nature of the groups $X^1$, $X^2$, $X^3$ and $X^4$ are such that halogen and - OH are in essentially stoichiometric proportions. Preferred polysulphones are prepared using 4,4'-bis (4-chlorophenylsulphonyl) biphenyl (A) as compound III and 4,4'-dihydroxydiphenyl-sulphone (B) or a mixture of (B) and 4,4'-dichlorodiphenyl-sulphone (C) as compound IV. The proportions of compound (A), (B), and (C) are from 1:2:1 to 2:2:0. Essentially stoichiometric proportion embraces a small excess of dihalide or bisphenol for example up to 5% molar, and it is particularly preferred to use excess dihalide.

Filament (fibres) of glass or carbon impregnated with the polysulphone or mixture especially those made by the procedure of one or more of EP-A 56703, 102158 and 102159, can be laminated together by the application of heat and pressure, for example by compression moulding or by heated rollers, at a temperature above the glass transition temperature of the polysulphone or mixture, conveniently at least 320°C and typically about 400°C, and at a pressure in particular at least 0.1, preferably at least 5,$NM/m^2$.

The composition may be formed into a multi-ply laminate. This may be anisotropic in which the fibres are oriented essentially parallel to one another or quasi-isotropic in each ply of which the fibres are oriented at an angle, conveniently 45° as in most quasi-isotropic laminates but possibly for example 30° or 60° or 90° or intermediately, to those in the plies above and below. Orientations intermediate between anisotropic and quasi-isotropic, and combination laminates, are also provided. Suitable laminates contain at least 4 preferably at least 8, plies. The number of plies is dependent on the application for the laminate, for example the strength required, and laminates containing 32 or even more, for example several hundred, plies may be desirable.

In a particularly preferred composition the polysulphone consists of the repeating units I and II in essentially equimolar proportions and continuous carbon fibre. Mouldings or, particularly, laminates formed therefrom show at a temperature up to 240°C a deterioration of less than 30% in flexural modulus as measured at 23°C. Furthermore, although this polysulphone is amorphous, the composition has an environmental resistance superior to that of many other amorphous polymers. Thus after exposure to water at 100°C for 14 days such a composition showed a gain in weight of less than 5%, essentially unaffected tranverse flexural strength and short-beam shear strength Furthermore, after exposure to a hydraulic fluid at 70°C for 14 days, a similar composition showed only a slight weight loss (less than 0.2% by weight), essentially unaffected short-beam shear strength and transverse flexural strength decreased by less than 30%.

Further details of the invention are set out by way of illustration in the following examples.

Example 1

A polysulphone containing the above-mentioned units I and II in essentially equimolecular proportions, linked together through ether linkages and having a reduced viscosity of 0.37 measured at 25°C using a 1.0% by weight solution in 100 cm$^3$ of a solution in N,N-dimethylformamide, was dry blended with diphenylsulphone by tumbling in a closed container in a 1:1 weight ratio.

25 collimated tows of continuous carbon fibres ("Magnamite" AS-4 supplied by Hercules Inc of Delaware, USA), each tow containing about 12000 individual filaments, were drawn at a rate of 300 mm/minute over a series of stationary guide bars to provide a band of width about 150 mm having a tension of about 50 kg. When the fibres had been guided into contiguous relationship they were pulled over a series of 4 fixed, heated, cylindrical bars of 12.6 mm diameter maintained at 390°C. The powder mixture of polymer and diphenyl sulphone was fed to the nip formed between the carbon fibre band and the first fixed cylindrical bar. The powder melted rapidly to provide a melt pool in the nip which impregnated the fibre band passing over the bar. The structure was passed over and under the three further heated bars without the addition of further of the polymer mixture. Provision was made for extracting the fumes of diphenyl sulphone which were evolved. The product obtained was a continuous tape, 150 mm wide and about 0.125 mm thick containing 60% by weight (53% by volume) of the carbon fibre which had been well wetted by the polymer.

Anisotropic Laminates Formation

Sections cut from the tape were laminated together by compression moulding at 400°C for five minutes at an applied pressure of 10 MN/m$^2$, then cooled to about 80°C, still in the press and under pressure, using air and then water, to give a cooling rate of about 15°C per minute. Sixteen thicknesses of the tape were laid up to give uniaxial alignment of the carbon fibre laminate of thickness about 2 mm.

Mechanical Properties

In Table One are given the results of mechanical testing at various temperatures.

Table One

| Temp | Longitudinal Flexure (a) | | Transverse Flexure (b) | | SBSS |
| (°C) | Modulus | Strength | Modulus | Strength | (c) |
| | $(GN/m^2)$ | $(MN/m^2)$ | $(GN/m^2)$ | $(MN/m^2)$ | $(MN/m^2)$ |
|---|---|---|---|---|---|
| 23 | 111 | 1450 | 7.1 | 91 | 76 |
| 80 | 114 | 1350 | 6.5 | 66 | 69 |
| 120 | ND | ND | 6.5 | 61 | 61 |
| 180 | 114 | 1150 | 6.0 | 48 | 48 |
| 240 | 82 | 300 | 3.0 | 13 | 29 |

Notes to Table One

(a)  Longitudinal Flexure was measured by the technique of ASTM Test Method D 790-80, using a 100 mm span.  ND means not determined.

(b)  Transverse Flexure was measured by the technique of ASTM Test Method D790-80, using a 40 mm span.

(c)  SBSS is short beam shear strength and is determined by the technique of ASTM Test Method D2344-72, using a span to sample thickness ratio of 5:1.

Environmental resistance

Samples of the laminates subjected to hot water, others to a hydraulic fluid ("Skydrol" grade LD4, available from Monsanto Chemical). The weight of the laminates and their mechanical properties were determined before and after. The results are set out in Table Two.

## EP 0 235 885 B1

Table Two

| Environment (d) | Weight change (e) (%) | Transverse flexural Strength retention (b) (f) (%) | SBSS retention (c) (f) (%) |
|---|---|---|---|
| Water | + 0.47 | 100 | 95 |
| Skydrol | - 0.09 | 73 | 100 |

Notes to Table Two (b) and (c) are both as defined in Notes to Table One.

(d) Water means water at 100°C for 14 days. Skydrol means hydraulic fluid ("Skydrol" grade LD4) at 70°C for 14 days.

(e) Weight change is given as a percentage of the original weight. + indicates a weight gain. - indicates a weight loss.

(f) Retention is expressed as a percentage of the original measurement.

Comparative Example

Using the procedure as described in Example 1, a composition was formed from a polysulphone having only units II namely 'Victrex' (Registered Trade Mark) PES (polyarylethersulphone) aromatic polymer 5200 P grade, obtainable from Imperial Chemical Industries PLC and having a reduced viscosity of 0.52. The polymer to diphenylsulphone ratio was 1:1 by weight.

Some samples of laminates made therefrom as described in Example 1 were subjected to water, others to Skydrol. Test results are set out in Table Three.

Table Three

| Environment (d) | Weight change (e) (%) | Transverse flexural strength retention (b) (f) (%) | SBSS retention (c) (f) (%) |
|---|---|---|---|
| Water | + 0.58 | 93 | 94 |
| Skydrol | + 0.03 | 66 | 99 |

Notes to Table Three

(b) and (c) are both as defined in Notes to Table One

(d), (e) and (f) are all as defined in Notes to Table Two.

From a comparison of the results set out in Tables Two and Three it will be seen that the composition of Example 1 shows resistance to water and hydraulic fluid superior to that of the composition of the Comparative Example. This is particularly evident in respect of the retention of tranverse flexural strength, which property is the most sensitive to any defects in the polymer composition.

Example 2

The procedure of Example 1 was repeated with the exception that the polymer to diphenylsulphone weight ratio was 1:2 and the composition contained 73% by weight (65% by volume) of carbon fibre.

Example 3

A quasi-isotropic laminate was made by laying up 16 thicknesses of tape from Example 1, with a 45° angle between successive plies, then uniting them by compression moulding as in Example 1. It was tested for impact resistance at various temperatures by the method of C J Hooley and S Turner (Mechanical Testing of Plastics, Institute of Mechanical Engineers, June/July 1979, Automotive Engineer), using a falling weight dart 12.7 mm in diameter and a 75 mm square specimen resting unclamped on a 50 mm support ring. The levels of energy absorbed in effecting a standard area of damage are shown in Table Four.

<p align="center">Table Four</p>

| Temp °C | Energy absorbed J, to maximum force | Total energy absorbed, J |
|---------|-------------------------------------|--------------------------|
| −55 | 6.0 | 19.2 |
| 23 | 5.9 | 21.2 |
| 70 | 5.7 | 21.9 |

Example 4

The laminates preparation described in Example 1 was repeated using a different batch of the polymer and with 68% w/w of the fibre. The products were tested in the same way at various temperatures, but excluding transverse flexure modulus. In addition, a 40-ply anisotropic laminate panel was made and tested by the method of ASTM D695-85, which involves machining the panel perpendicularly to the fibres with a 6 mm wide rectangular groove on each side leaving a 1 mm thick central planar region, then measuring compressive strength by applying force to panel in the direction of the fibres. Results are shown in Table Five.

<p align="center">7</p>

Table Five

| Temp (°C) | Longitudinal Modulus (GN/m$^2$) | Flexure (a) Strength (MN/m$^2$) | Transverse Flexure (b) Strength (MN/m$^2$) | SBSS (c) (MN/m$^2$) | Compressive Strength (MN/m$^2$) |
|---|---|---|---|---|---|
| −55 | 120 | 1300 | 102 | 79 | 1549 |
| 23 | 119 | 1208 | 81 | 63 | 1324 |
| 80 | 118 | 1044 | 58 | 53 | 1176 |
| 160 | 116 | 793 | 46 | 42 | 1137 |
| 180 | 115 | 744 | 41 | 33 | 1134 |
| 200 | 117 | 644 | 34 | 23 | 1043 |
| 220 | 98 | 305 | 33 | 14 | ND |

Notes : Suffixes (a), (b), and (c) have the same meaning as for Table One.

**Claims**

1. A polymer composition comprising:
   a) at least one aromatic polysulphone consisting of the repeating units

   -Ph-SO$_2$-Ph-Ph-SO$_2$-Ph-      I

   and

   -Ph-SO$_2$-Ph-      II

   where Ph is paraphenylene, said units being linked together through ether linkages and being present in a relative molar proportion I:II in the range 25:75 to 60:40; and
   b) a fibrous reinforcing agent in the form of essentially continuous fibres of glass or carbon;
   whereby said composition contains at least 20% by volume of component a) and between 5% to 80% by weight calculated on the total weight of components a) and b) of component b).

2. A composition as claimed in claim 1 in which component a) is a single polysulphone; or is a mixture of two polysulphones one of which contains only units II and the other consists of the repeating units I and II in the relative molar proportion I:II in the range 25:75 to 60:40.

3. A composition as claimed in claim 1 or claim 2 in which component a) has a reduced viscosity in the range 0.05 to 2.0, preferably in the range 0.2 to 1.0.

4. A composition as claimed in any one of claims 1 to 3 in which the range of proportion of units I:II is 25:75 to 50:50.

5. A composition as claimed in any one of claims 1 to 4 comprising said component a) in which the polysulphone consists of the repeat units I and II in essentially equimolar proportions and said component b) which consists of carbon fibres.

6. A laminate formed from a composition as claimed in any one of claims 1 to 5.

7. A process for the production of a composition as claimed in any one of claims 1 to 5 comprises passing component b) into contact with a melt formed from component a) together with diphenyl sulphone to impregnate component b) with component a).

8. A process as claimed in claim 7 which comprises laminating the composition in the form of impregnated fibres to other impregnated fibres thereof by the application of heat and pressure.

**Revendications**

1. Composition polymère comprenant :
   a) au moins une polysulfone aromatique formée des motifs répétitifs

   $-Ph-SO_5-Ph-Ph-SO_2-Ph-$     (I)

   et

   $-Ph-SO_2-Ph-$     (II)

   où Ph représente le paraphénylène, lesdits motifs étant reliés ensemble par des liaisons éther et contenus en une proportion molaire relative I:II dans la plage de 25:75 à 60:40 ; et
   b) un agent de renforcement fibreux se présentant sous la forme de fibres de verre ou de carbone, essentiellement continues ;
   ladite composition contenant au moins 20 % en volume de composant a) et entre 5 et 80 % en poids de composant b), par rapport au poids total des composants a) et b).

2. Composition selon la revendication 1, dans laquelle le composant a) est une polysulfone simple, ou un mélange de deux polysulfones, dont l'une contient seulement des motifs II et l'autre est formée des motifs répétitifs I et II, selon une proportion molaire relative I:II comprise dans la plage de 25:75 à 60:40.

3. Composition selon la revendication 1 ou 2, dans laquelle le composant a) a une viscosité réduite, dans la plage de 0,05 à 2,0, de préférence dans la plage de 0,2 à 10.

4. Composition selon une quelconque des revendications 1 à 3, dans laquelle la plage de proportion des motifs I:II est de 25:75 à 50:50.

5. Composition selon une quelconque des revendications 1 à 4, comprenant ledit composant a) dans lequel la polysulfone est formée des motifs répétitifs I et II en proportions pratiquement équimolaires, et le composant b) qui est formé de fibres de carbone.

6. Stratifié formé d'une composition selon une quelconque des revendications 1 à 5.

7. Procédé de préparation d'une composition selon une quelconque des revendications 1 à 5, consistant à amener le composant b) en contact avec une masse fondue formée du composant a), ainsi qu'avec de la diméthylsulfone, pour imprégner le composant b) du composant a).

8. Procédé selon la revendication 7, qui consiste à laminer la composition sous la forme de fibres imprégnées sur d'autres fibres imprégnées de celle-ci, par application de chaleur et de pression.

**Patentansprüche**

1. Polymermasse, die
   a) mindestens ein aromatisches Polysulfon, das aus den Repetiereinheiten

   $-Ph-SO_2-Ph-Ph-SO_2-Ph$     I

und

-Ph-SO$_2$-Ph-        II

besteht, worin Ph para-Phenylen ist, wobei die Einheiten durch Etherbindungen miteinander verbunden sind und in einem relativen molaren Verhältnis I:II, das im Bereich von 25:75 bis 60: 40 liegt, vorhanden sind, und
b) ein faserförmiges Verstärkungsmittel in Form von im wesentlichen kontinuierlichen Fasern aus Glas oder Kohlenstoff
enthält, wobei die Masse mindestens 20 Volumen-% der Komponente a) und zwischen 5 und 80 Masse-%, auf der Grundlage der Gesamtmasse der Komponenten a) und b) berechnet, der Komponente b) enthält.

2. Masse nach Anspruch 1, bei der die Komponente a) ein einziges Polysulfon ist oder eine Mischung aus zwei Polysulfonen ist, von denen eines nur Einheiten II enthält und das andere aus den Repetiereinheiten I und II in dem relativen molaren Verhältnis I:II, das im Bereich von 25:75 bis 60:40 liegt, besteht.

3. Masse nach Anspruch 1 oder Anspruch 2, bei der die Komponente a) eine reduzierte Viskosität hat, die im Bereich von 0,05 bis 2,0 und vorzugsweise im Bereich von 0,2 bis 1,0 liegt.

4. Masse nach einem der Ansprüche 1 bis 3, bei der der Bereich des Verhältnisses der Einheiten I:II 25:75 bis 50:50 beträgt.

5. Masse nach einem der Ansprüche 1 bis 4, die die Komponente a), in der das Polysulfon aus den Repetiereinheiten I und II in im wesentlichen äquimolaren Anteilen besteht, und die Komponente b), die aus Kohlenstoffasern besteht, enthält.

6. Laminat, das aus einer Masse nach einem der Ansprüche 1 bis 5 gebildet ist.

7. Verfahren zur Herstellung einer Masse nach einem der Ansprüche 1 bis 5, bei dem die Komponente b) einem Kontakt mit einer Schmelze, die aus der Komponente a) zusammen mit Diphenylsulfon gebildet worden ist, zugeführt wird, um die Komponente b) mit der Komponente a) zu imprägnieren.

8. Verfahren nach Anspruch 7, bei dem die Masse in Form von imprägnierten Fasern durch Anwendung von Hitze und Druck auf andere imprägnierte Fasern davon laminiert wird.